# EUROPEAN PATENT SPECIFICATION

(11) **EP 2 413 572 B1**
(45) Date of publication and mention of the grant of the patent: **02.09.2015**
(21) Application number: 10171515.9
(22) Date of filing: 30.07.2010
(51) Int. Cl.: H04M 1/02, H01Q 1/24

(54) **Mobile wireless communications device with spatial diversity antenna and related methods**
Tragbare drahtlose Kommunikationsvorrichtung mit Raumdiversitätsantenne und zugehöriges Verfahren
Dispositif mobile de communication sans fil doté d'une antenne à diversité spatiale et procédés correspondants

(43) Date of publication of application: 01.02.2012
(73) Proprietor: BlackBerry Limited, Waterloo, ON N2K 0A7 (CA)
(72) Inventor: Van Wonterghem, Jari Kristian, Tampere 33540 (FI); Qin, Xiaoping, Kanata Ontario K2K 3K1 (CA); Park, Subum, Kanata Ontario K2K 3K1 (CA)
(74) Representative: Fennell, Gareth Charles

(56) References cited:
- EP-A1- 2 262 053
- WO-A1-97/23016
- US-A1- 2004 142 735
- US-A1- 2007 021 158
- US-A1- 2009 069 062

## Description

### Technical Field

The present disclosure relates to the field of communications, and, more particularly, to wireless communications and related methods.

### Background

Cellular communication systems continue to grow in popularity and have become an integral part of both personal and business communications. Cellular telephones allow users to place and receive phone calls most anywhere they travel. Moreover, as cellular telephone technology is increased, so too has the functionality of cellular devices. For example, many cellular devices now incorporate Personal Digital Assistant (PDA) features such as calendars, address books, task lists, calculators, memo and writing programs, etc. These multi-function devices usually allow users to wirelessly send and receive electronic mail (email) messages and access the internet via a cellular network and/or a wireless local area network (WLAN), for example.

As the functionality of cellular communications devices continues to increase, so too does demand for smaller devices that are easier and more convenient for users to carry. Nevertheless, the move towards multi-functional devices makes miniaturization more difficult as the requisite number of installed components increases. Indeed, the typical cellular communications may include several antennas, for example, a cellular antenna, a global positioning antenna, and a WiFi IEEE 802.11g antenna.

More specifically, in typical "clamshell" form factor cellular communications devices, the packaging of components may become problematic since it may be undesirable to couple devices through the hinge of the device. The coupling of devices through the hinge may become undesirable due to the manufacturing cost of a complex hinge piece and reliability problems in the use of the device.

US Patent application no. 2009/069062 describes a mobile terminal including a first antenna configured to receive power from the first circuit board housed in the first housing, a second antenna configured to receive power from the second circuit board housed in the second housing, a first signal cable configured to electrically connect the first circuit board to the second circuit board and transmit a signal between the first circuit board and the second circuit board, and a second signal cable configured to electrically connect the first circuit board to the second circuit board and bypasses a board current flowing through the first signal cable from the first circuit board to the second antenna during operation of the second antenna.

US Patent application no. 2004142735 describes a mobile communication terminal having a main body and a folder pivotably connected to the main body, each having internal surfaces provided with a ground coated with conductive material; a hinge device including a conductive hinge housing received in the folder and connected to the grounds, a conductive coil spring received in the hinge housing and supported at one end of the hinge housing against an inner wall of one end of the hinge housing, and a conductive contact pin supported at one end against the other end of the coil spring and protruding through the other end of the hinge housing to be connected to the main body; and a conductive hinge dummy mounted within the main body and connected to the ground and the other end of the contact pin. Thus, operational characteristics of the terminal are improved and electromagnetic wave absorptance is reduced.

International patent application no. WO 9723016 describes a portable radio terminal having diversity receive antennas includes a housing that has a main section and a flip down section. A first antenna is connected to the main section and a second antenna is housed in the flip down section. The second antenna preferably has a first section extending along a first axis in the plan of the flip down housing section and a second section extending along a second axis in the plan of the flip down housing section.

US patent application no. 2007/021158 describes a folder or hinge type portable terminal having a grounding unit. A main body has a main board. A folder opens and closes at an angle from the main body. At least one component of a hinge module is formed of a metallic material, and opens and closes the folder at an angle from the main body. A connecting means selectively contacts a grounding portion of the main board to the material components of the hinge module in response to the opening and closing operation of the folder, to provide optimal antenna radiation characteristic irrespective of the opening and closing operation of the folder.

### Brief Description of the Drawings

FIG. 1 is a side view of the mobile wireless communications device in an open position, according to the present disclosure.
FIG. 2 is a side view of the mobile wireless communications device of FIG. 1 in a closed position.
FIG. 3 is a side view of the mobile wireless communications device of FIG. 1 in the closed position with a portion of the second housing removed.
FIG. 4 is a perspective view of the mobile wireless communications device of FIG. 1 in the open position with a portion of the first housing removed.
FIG. 5 is a perspective view of a portion of the mobile wireless communications device of FIG. 1 in the open position with the first and second housings removed.
FIG. 6 is a plain view of the second antenna of the mobile wireless communications device of FIG. 1.
FIG. 7 is a plain view of the first antenna of the mobile wireless communications device of FIG. 1.
FIG. 8 is a schematic circuit diagram of the mobile wireless communications device of FIG. 1.
FIG. 9 is a block diagram of an example embodiment of a mobile device that may be used with the first and second antennas of FIGS. 1-8.
FIG. 10 is a block diagram of an example embodiment of a communication subsystem component of the mobile device of FIG. 9.
FIG. 11 is an example block diagram of a node of a wireless network.
FIG. 12 is a block diagram illustrating components of a host system in one example configuration for use with the wireless network of FIG. 11 and the mobile device of FIG. 9.

### Detailed Description of the Preferred embodiments

An aspect is directed to a mobile wireless communications device that includes first and second housings, a hinge pivotally coupling the first and second housings, and a first antenna carried by the first housing. The mobile wireless communications device includes a second antenna carried by the second housing, wireless transceiver circuitry carried by the first housing and configured for spatial diversity operation with the first and second antennas, and a hinge connector carried by the hinge and coupling the second antenna to the wireless transceiver circuitry.

More specifically, the hinge comprises a hinge body having a passageway therethrough. The hinge connector includes a coaxial portion extending into the passageway of the hinge body, and a flexible circuit portion being coupled to the coaxial portion and comprising a flexible substrate and a plurality of electrical conductive traces thereon.

In some embodiments, the hinge body may have a first end and a medial portion adjacent thereto, and the coaxial portion may pass into the first end, and the flexible circuit portion may extend from the medial portion. Additionally, in yet other embodiments, the mobile wireless communications may further comprise an electrically conductive bias spring providing an electrically conductive path between the first and second housings.

Furthermore, the mobile wireless communications may further comprise a circuit board carried by the first housing. The mobile wireless communications may also comprise a capacitor on the circuit board electrically coupled to the electrically conductive bias spring. The mobile wireless communications may further include a display carried by the second housing, and a graphic processing unit (GPU) carried by the first housing and configured to be coupled to the display via the hinge connector.

For example, the first antenna may be carried by the first housing on an end thereof opposite to the hinge. The second antenna may be carried by the second housing adjacent the hinge. The hinge connector may comprise a plurality of connections.

Another aspect is directed to a method of making a mobile wireless communications device. The method may include providing first and second housings, pivotally coupling the first and second housings with a hinge, and positioning a first antenna to be carried by the first housing. The method may include positioning a second antenna to be carried by the second housing, positioning wireless transceiver circuitry to be carried by the first housing and for spatial diversity operation with the first and second antennas, and coupling the second antenna to the wireless transceiver circuitry with a hinge connector carried by the hinge.

Another aspect is directed to a method for operating a mobile wireless communications device that may include first and second housings, a hinge pivotally coupling the first and second housings, and a first antenna carried by the first housing. The mobile wireless communications device includes a second antenna carried by the second housing, wireless transceiver circuitry carried by the first housing, and a hinge connector carried by the hinge and coupling the second antenna to the wireless transceiver circuitry. The method may include using the wireless transceiver circuitry for a spatial diversity operation with the first and second antennas.

The present description is made with reference to the accompanying drawings, in which various example embodiments are shown. However, many different example embodiments may be used, and thus the description should not be construed as limited to the example embodiments set forth herein. Rather, these example embodiments are provided so that this disclosure will be thorough and complete. Like numbers refer to like elements throughout.

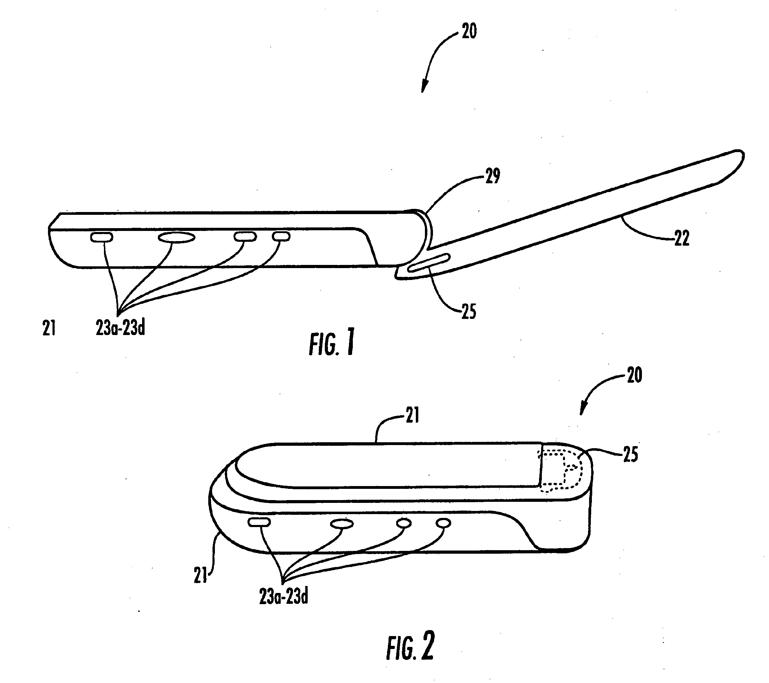

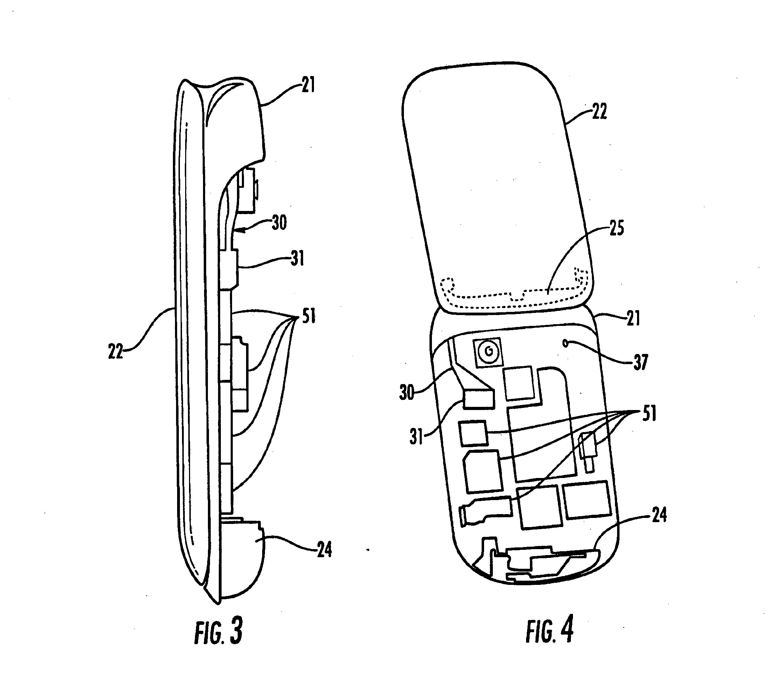

Referring now to FIGS. 1-7, a mobile wireless communications device **20** according to the present invention is now described. The mobile wireless communications device **20** illustratively includes first and second housings **21, 22.** The first and second housings **21, 22** may comprise integrally molded plastic or a metal/alloy (anodized aluminum), for example. The mobile wireless communications device **20** illustratively includes a hinge **29** pivotally coupling the first and second housings **21, 22,** i.e. the mobile wireless communications device has a flip/clamshell form factor. The first housing **21** illustratively includes a plurality of switches **23a-23d** on a side thereof, for example, push-to-talk (PTT) and volume control switches.

The mobile wireless communications device 20 illustratively includes a first antenna **24** carried by the first housing, and a second antenna **25** carried by the second housing. For example, the first and second antennas **24, 25** may comprise flexible metal formed on a flexible substrate. For example, and as in the illustrated embodiment, the first antenna **24** is carried by the first housing **21** on an end thereof opposite to the hinge **29.** The second antenna **25** is carried by the second housing **22** adjacent the hinge **29.**

The mobile wireless communications device **20** illustratively includes wireless transceiver circuitry **51** and other circuitry **51** carried by the first housing 21 and configured for spatial diversity operation with the first and second antennas **24, 25.** For example, the other circuitry **51** may include a processor, a memory, etc. As will be appreciated by those skilled in the art, the spatial diversity operation improves reception of a transmitted signal. Indeed, the spaced apart positioning of the first and second antennas **24, 25** is advantageous to the spatial diversity operation. The mobile wireless communications device **20** illustratively includes a hinge connector **30** carried by the hinge **29** and coupling the second antenna **25** to the wireless transceiver circuitry **51.**

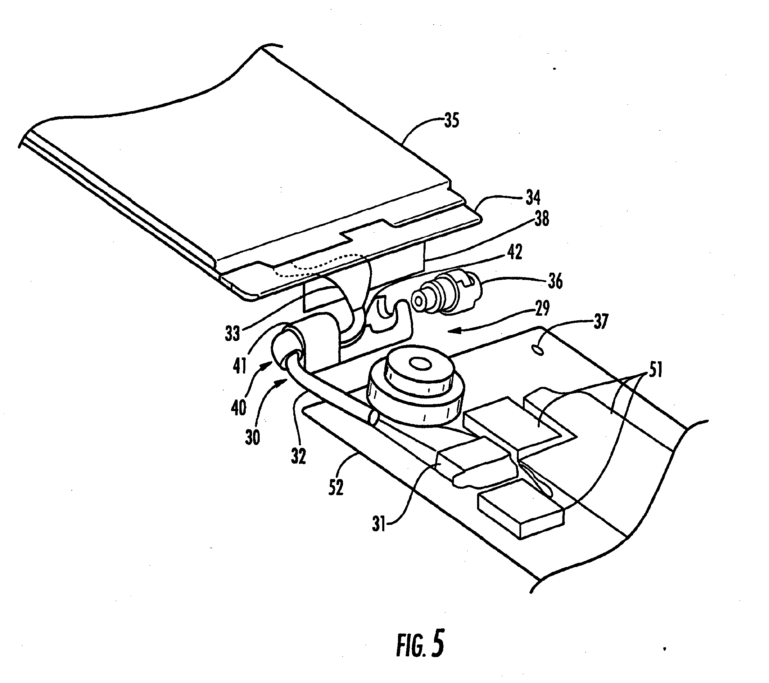

As perhaps best seen in FIG. 5, the mobile wireless communications device **20** illustratively includes a circuit board **35** carried by the second housing **22.** The circuit board **35** illustratively includes flexible circuit portions **34, 38** coupling the circuit board to the hinge connector **30.** The hinge **29** illustratively includes a hinge body **40** having a passageway therethrough. The hinge connector **30** illustratively includes a coaxial portion **32** extending into the passageway of the hinge body **40,** and a flexible circuit portion **33** being coupled to the coaxial portion and comprising a flexible substrate and a plurality of electrical conductive traces thereon.

The flexible circuit portion **33** is coupled to the underside of the flexible circuit portions **34, 38** (FIG. 5: shown with shadowed lines). The hinge body **40** illustratively includes a first end **41** and a medial portion **42** adjacent thereto, and the coaxial portion **32** passes into the first end, and the flexible circuit portion extends from the medial portion. Advantageously, the connection lines of the flexible circuit portion **33** do not cross over the second antenna **25** (not shown in FIG. 5), thereby improving reception performance. In other words, the connection lines of the flexible circuit portion **33** and the second antenna **25** are on opposing sides of the circuit board **35.**

In the illustrated embodiment, the mobile wireless communications **20** illustratively includes an electrically conductive bias spring **36** providing an electrically conductive path between the first **21** and second **22** housings. As will be appreciated by those skilled in the art, the electrically conductive bias spring **36** serves as the radio frequency (RF) ground contact for the first and second antennas **24, 25.** In particular, the electrically conductive bias spring **36** aids in moving the second housing **22** from the closed (FIG. 2) and open (FIG. 1) positions.

The mobile wireless communications **20** illustratively includes a circuit board **52** carried by the first housing **21,** and a capacitor **37** on the circuit board electrically coupled to the electrically conductive bias spring **36.** The hinge connector **30** illustratively includes a circuit connector **31** for coupling to the circuit board **52,** for example, a zero insertion force (ZIF) connector.

As will be appreciated by those skilled in the art, the capacitance value of the capacitor **37** may be adjusted for desired RF performance. The mobile wireless communications **20** illustratively includes a display (not shown) carried by the second housing **22,** and a graphic processing unit (GPU) **51** carried by the first housing **21** and configured to be coupled to the display via the hinge connector **30.** In the illustrated embodiment, the hinge connector **30** illustratively includes a plurality of connections, for example, the RF connection to the second antenna **25** and the display connection from the GPU **51.**

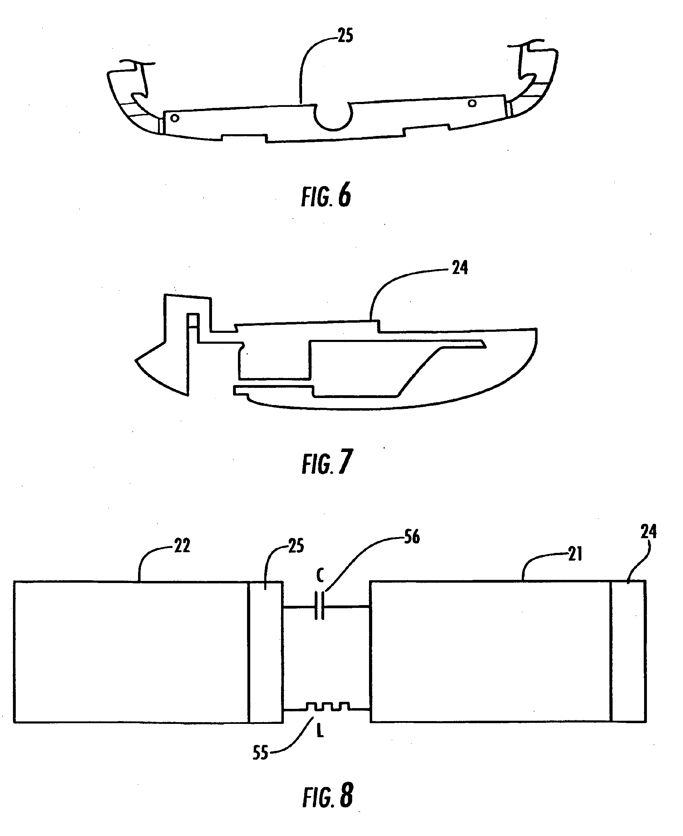

Referring now to FIG. 8, the mobile communications device **20** illustratively includes an inductor **55** and a capacitor **56** coupling the first and second antennas **24, 25** together for controlling isolation and balancing of the first and second antennas. The inductor **55** is provided via the aforementioned hinge connector **30,** and the capacitor **56** is provided via cooperation between the electrically conductive bias spring **36** and the capacitor **37** on the circuit board **52.**

Advantageously, the arrangement of the first and second antennas **24, 25** and the hinge connector **30** coupling the second antenna to the wireless circuitry **51** improve diversity antenna performance. This arrangement also reduces the number mechanical parts needed to connect the second antenna **25,** thereby reducing manufacturing costs and improving reliability. Moreover, the positioning of the second antenna **25** on the flexible circuit portions **34, 38** reduces packaging size and improves antenna performance.

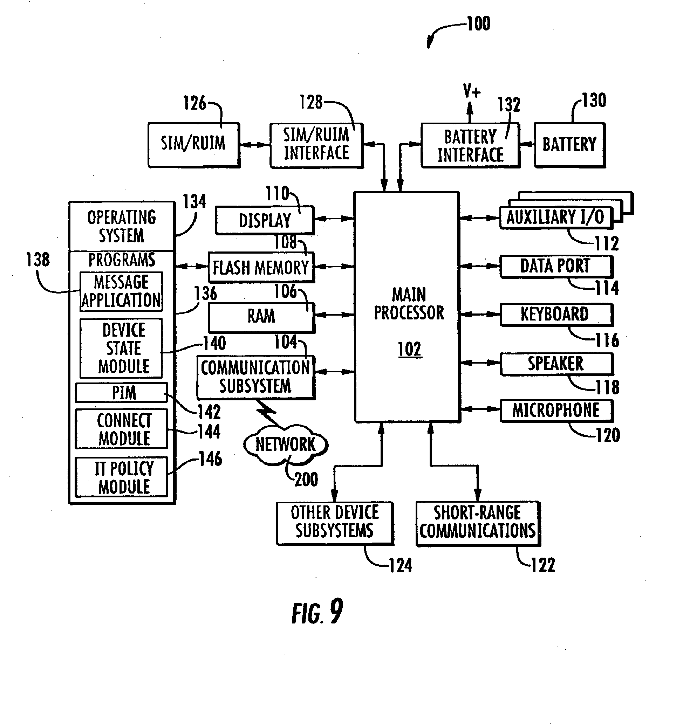

Example components that may be used in the mobile wireless communications device of FIGS. 1-8 are further described below with reference to FIGS. 9-12. Generally speaking, a mobile device may be configured according to an IT policy. It should be noted that the term IT policy, in general, refers to a collection of IT policy rules, in which the IT policy rules can be defined as being either grouped or non-grouped and global or per-user. The terms grouped, non-grouped, global and per-user are defined further below. Examples of applicable communication devices include pagers, cellular phones, cellular smart-phones, wireless organizers, personal digital assistants, computers, laptops, handheld wireless communication devices, wirelessly enabled notebook computers and the like.

The mobile device is a two-way communication device with advanced data communication capabilities including the capability to communicate with other mobile devices or computer systems through a network of transceiver stations. The mobile device may also have the capability to allow voice communication. Depending on the functionality provided by the mobile device, it may be referred to as a data messaging device, a two-way pager, a cellular telephone with data messaging capabilities, a wireless Internet appliance, or a data communication device (with or without telephony capabilities). To aid the reader in understanding the structure of the mobile device and how it communicates with other devices and host systems, reference will now be made to FIGS. 9-12.

Referring first to FIG. 9, shown therein is a block diagram of an example embodiment of a mobile device **100.** The mobile device **100** includes a number of components such as a main processor **102** that controls the overall operation of the mobile device **100.** Communication functions, including data and voice communications, are performed through a communication subsystem **104.** The communication subsystem **104** receives messages from and sends messages to a wireless network **200.** In this example embodiment of the mobile device **100,** the communication subsystem **104** is configured in accordance with the Global System for Mobile Communication (GSM) and General Packet Radio Services (GPRS) standards. The GSM/GPRS wireless network is used worldwide and it is expected that these standards will be superseded eventually by Enhanced Data GSM Environment (EDGE) and Universal Mobile Telecommunications Service (UMTS). New standards are still being defined, but it is believed that they will have similarities to the network behavior described herein, and it will also be understood by persons skilled in the art that the example embodiments described herein are intended to use any other suitable standards that are developed in the future. The wireless link connecting the communication subsystem **104** with the wireless network **200** represents one or more different Radio Frequency (RF) channels, operating according to defined protocols specified for GSM/GPRS communications. With newer network protocols, these channels are capable of supporting both circuit switched voice communications and packet switched data communications.

Although the wireless network **200** associated with mobile device **100** is a GSM/GPRS wireless network in one example implementation, other wireless networks may also be associated with the mobile device **100** in variant implementations. The different types of wireless networks that may be employed include, for example, data-centric wireless networks, voice-centric wireless networks, and dual-mode networks that can support both voice and data communications over the same physical base stations. Combined dual-mode networks include, but are not limited to, Code Division Multiple Access (CDMA) or CDMA2000 networks, GSM/GPRS networks (as mentioned above), and future third-generation (3G) networks like EDGE and UMTS. Some other examples of data-centric networks include WiFi 802. 11, Mobitex^{™} and DataTAC^{™} network communication systems. Examples of other voice-centric data networks include Personal Communication Systems (PCS) networks like GSM and Time Division Multiple Access (TDMA) systems.

The main processor **102** also interacts with additional subsystems such as a Random Access Memory (RAM) **106,** a flash memory **108,** a display **110,** an auxiliary input/output (I/O) subsystem **112,** a data port **114,** a keyboard **116,** a speaker **118,** a microphone **120,** short-range communications **122** and other device subsystems **124.**

Some of the subsystems of the mobile device **100** perform communication-related functions, whereas other subsystems may provide "resident" or on-device functions. By way of example, the display **110** and the keyboard **116** may be used for both communication-related functions, such as entering a text message for transmission over the network **200,** and device-resident functions such as a calculator or task list.

The mobile device **100** can send and receive communication signals over the wireless network **200** after required network registration or activation procedures have been completed. Network access is associated with a subscriber or user of the mobile device **100.** To identify a subscriber, the mobile device **100** requires a SIM/RUIM card **126** (i. e., Subscriber Identity Module or a Removable User Identity Module) to be inserted into a SIM/RUIM interface **128** in order to communicate with a network. The SIM card or RUIM **126** is one type of a conventional "smart card" that can be used to identify a subscriber of the mobile device **100** and to personalize the mobile device **100,** among other things. Without the SIM card **126,** the mobile device 100 is not fully operational for communication with the wireless network **200.** By inserting the SIM card/RUIM **126** into the SIM/RUIM interface **128,** a subscriber can access all subscribed services. Services may include: web browsing and messaging such as email, voice mail, Short Message Service (SMS), and Multimedia Messaging Services (MMS). More advanced services may include: point of sale, field service and sales force automation. The SIM card/RUIM **126** includes a processor and memory for storing information. Once the SIM card/RUIM **126** is inserted into the SIM/RUIM interface **128,** it is coupled to the main processor **102.** In order to identify the subscriber, the SIM card/RUIM **126** can include some user parameters such as an International Mobile Subscriber Identity (IMSI). An advantage of using the SIM card/RUIM **126** is that a subscriber is not necessarily bound by any single physical mobile device. The SIM card/RUIM **126** may store additional subscriber information for a mobile device as well, including date book (or calendar) information and recent call information. Alternatively, user identification information can also be programmed into the flash memory **108.**

The mobile device **100** is a battery-powered device and includes a battery interface **132** for receiving one or more rechargeable batteries **130.** In at least some example embodiments, the battery **130** can be a smart battery with an embedded microprocessor. The battery interface **132** is coupled to a regulator (not shown), which assists the battery **130** in providing power v+ to the mobile device **100.** Although current technology makes use of a battery, future technologies such as micro fuel cells may provide the power to the mobile device **100.**

The mobile device **100** also includes an operating system **134** and software components **136** to **146** which are described in more detail below. The operating system **134** and the software components **136** to **146** that are executed by the main processor **102** are typically stored in a persistent store such as the flash memory **108,** which may alternatively be a read-only memory (ROM) or similar storage element (not shown). Those skilled in the art will appreciate that portions of the operating system **134** and the software components **136** to **146,** such as specific device applications, or parts thereof, may be temporarily loaded into a volatile store such as the RAM **106.** Other software components can also be included, as is well known to those skilled in the art.

The subset of software applications **136** that control basic device operations, including data and voice communication applications, will normally be installed on the mobile device **100** during its manufacture. Other software applications include a message application **138** that can be any suitable software program that allows a user of the mobile device **100** to send and receive electronic messages. Various alternatives exist for the message application **138** as is well known to those skilled in the art. Messages that have been sent or received by the user are typically stored in the flash memory **108** of the mobile device **100** or some other suitable storage element in the mobile device **100.** In at least some example embodiments, some of the sent and received messages may be stored remotely from the device 100 such as in a data store of an associated host system that the mobile device **100** communicates with.

The software applications can further include a device state module **140,** a Personal Information Manager (PIM) **142,** and other suitable modules (not shown). The device state module **140** provides persistence, i. e., the device state module **140** ensures that important device data is stored in persistent memory, such as the flash memory **108,** so that the data is not lost when the mobile device **100** is turned off or loses power.

The PIM **142** includes functionality for organizing and managing data items of interest to the user, such as, but not limited to, email, contacts, calendar events, voice mails, appointments, and task items. A PIM application has the ability to send and receive data items via the wireless network **200.** PIM data items may be seamlessly integrated, synchronized, and updated via the wireless network **200** with the mobile device subscriber's corresponding data items stored and/or associated with a host computer system. This functionality creates a mirrored host computer on the mobile device **100** with respect to such items. This can be particularly advantageous when the host computer system is the mobile device subscriber's office computer system.

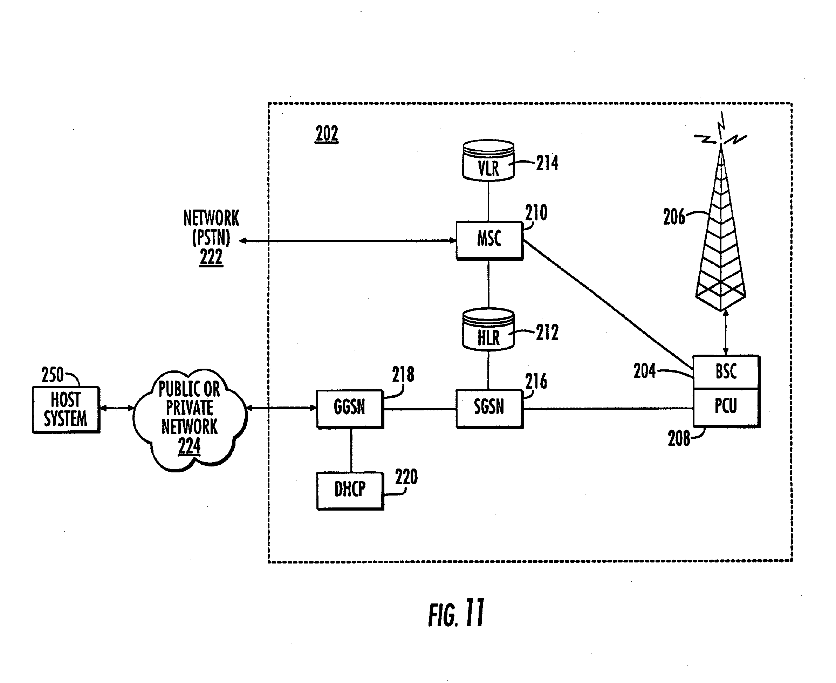

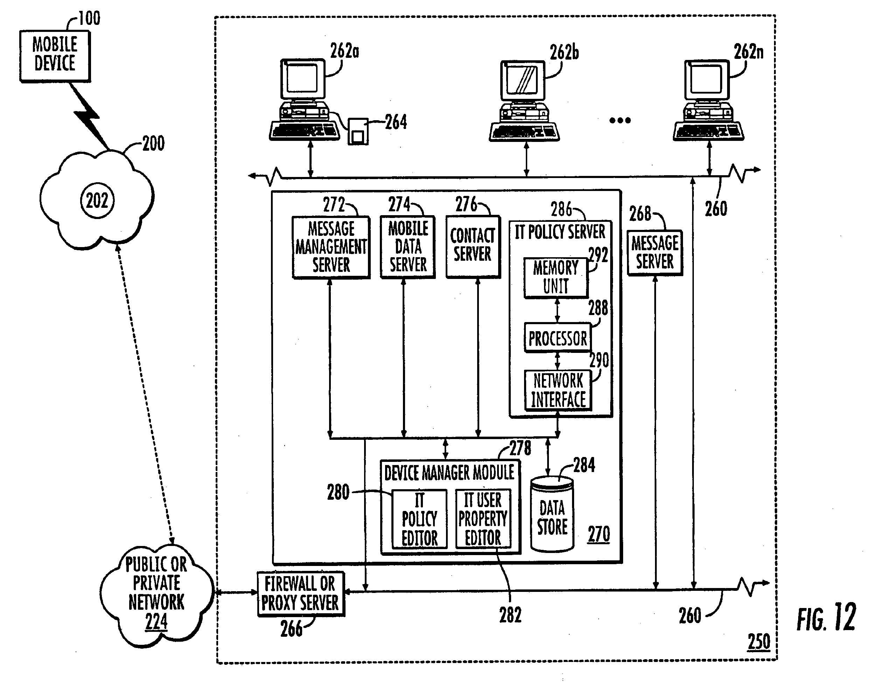

The mobile device **100** also includes a connect module **144,** and an IT policy module **146.** The connect module **144** implements the communication protocols that are required for the mobile device **100** to communicate with the wireless infrastructure and any host system, such as an enterprise system, that the mobile device **100** is authorized to interface with. Examples of a wireless infrastructure and an enterprise system are given in FIGS. 11 and 12, which are described in more detail below.

The connect module **144** includes a set of APIs that can be integrated with the mobile device **100** to allow the mobile device **100** to use any number of services associated with the enterprise system. The connect module **144** allows the mobile device **100** to establish an end-to-end secure, authenticated communication pipe with the host system. A subset of applications for which access is provided by the connect module **144** can be used to pass IT policy commands from the host system to the mobile device 100. This can be done in a wireless or wired manner. These instructions can then be passed to the IT policy module **146** to modify the configuration of the device **100.** Alternatively, in some cases, the IT policy update can also be done over a wired connection.

The IT policy module **146** receives IT policy data that encodes the IT policy. The IT policy module **146** then ensures that the IT policy data is authenticated by the mobile device **100.** The IT policy data can then be stored in the flash memory **106** in its native form. After the IT policy data is stored, a global notification can be sent by the IT policy module **146** to all of the applications residing on the mobile device **100.** Applications for which the IT policy may be applicable then respond by reading the IT policy data to look for IT policy rules that are applicable.

The IT policy module **146** can include a parser (not shown), which can be used by the applications to read the IT policy rules. In some cases, another module or application can provide the parser. Grouped IT policy rules, described in more detail below, are retrieved as byte streams, which are then sent (recursively, in a sense) into the parser to determine the values of each IT policy rule defined within the grouped IT policy rule.
In at least some example embodiments, the IT policy module **146** can determine which applications are affected by the IT policy data and send a notification to only those applications. In either of these cases, for applications that aren't running at the time of the notification, the applications can call the parser or the IT policy module **146** when they are executed to determine if there are any relevant IT policy rules in the newly received IT policy data.

All applications that support rules in the IT Policy are coded to know the type of data to expect. For example, the value that is set for the "WEP User Name" IT policy rule is known to be a string; therefore the value in the IT policy data that corresponds to this rule is interpreted as a string. As another example, the setting for the "Set Maximum Password Attempts" IT policy rule is known to be an integer, and therefore the value in the IT policy data that corresponds to this rule is interpreted as such.

After the IT policy rules have been applied to the applicable applications or configuration files, the IT policy module **146** sends an acknowledgement back to the host system to indicate that the IT policy data was received and successfully applied.

Other types of software applications can also be installed on the mobile device **100.** These software applications can be third party applications, which are added after the manufacture of the mobile device **100.** Examples of third party applications include games, calculators, utilities, etc.

The additional applications can be loaded onto the mobile device **100** through at least one of the wireless network **200,** the auxiliary I/O subsystem **112,** the data port **114,** the short-range communications subsystem **122,** or any other suitable device subsystem **124.** This flexibility in application installation increases the functionality of the mobile device **100** and may provide enhanced on-device functions, communication-related functions, or both. For example, secure communication applications may enable electronic commerce functions and other such financial transactions to be performed using the mobile device **100.**

The data port **114** enables a subscriber to set preferences through an external device or software application and extends the capabilities of the mobile device **100** by providing for information or software downloads to the mobile device **100** other than through a wireless communication network. The alternate download path may, for example, be used to load an encryption key onto the mobile device **100** through a direct and thus reliable and trusted connection to provide secure device communication.

The data port **114** can be any suitable port that enables data communication between the mobile device **100** and another computing device. The data port **114** can be a serial or a parallel port. In some instances, the data port **114** can be a USB port that includes data lines for data transfer and a supply line that can provide a charging current to charge the battery **130** of the mobile device **100.**

The short-range communications subsystem **122** provides for communication between the mobile device **100** and different systems or devices, without the use of the wireless network **200.** For example, the subsystem **122** may include an infrared device and associated circuits and components for short-range communication. Examples of short-range communication standards include standards developed by the Infrared Data Association (IrDA), Bluetooth, and the 802. 11 family of standards developed by IEEE.

In use, a received signal such as a text message, an email message, or web page download will be processed by the communication subsystem **104** and input to the main processor **102.** The main processor **102** will then process the received signal for output to the display 110 or alternatively to the auxiliary I/O subsystem **112.** A subscriber may also compose data items, such as email messages, for example, using the keyboard **116** in conjunction with the display **110** and possibly the auxiliary I/O subsystem **112.** The auxiliary subsystem **112** may include devices such as: a touch screen, mouse, track ball, infrared fingerprint detector, or a roller wheel with dynamic button pressing capability. The keyboard **116** is preferably an alphanumeric keyboard and/or telephone-type keypad. However, other types of keyboards may also be used. A composed item may be transmitted over the wireless network **200** through the communication subsystem **104.**

For voice communications, the overall operation of the mobile device **100** is substantially similar, except that the received signals are output to the speaker **118,** and signals for transmission are generated by the microphone **120.** Alternative voice or audio I/O subsystems, such as a voice message recording subsystem, can also be implemented on the mobile device **100.** Although voice or audio signal output is accomplished primarily through the speaker **118,** the display **110** can also be used to provide additional information such as the identity of a calling party, duration of a voice call, or other voice call related information.

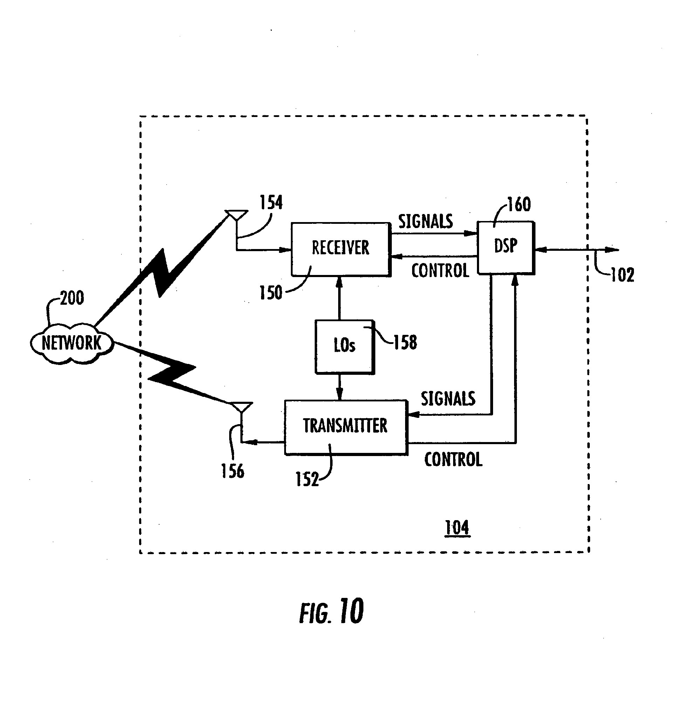

Referring now to FIG. 10, an example block diagram of the communication subsystem component **104** is shown. The communication subsystem **104** includes a receiver **150,** a transmitter **152,** as well as associated components such as one or more embedded or internal antenna elements **154** and **156,** Local Oscillators (LOs) **158,** and a processing module such as a Digital Signal Processor (DSP) **160.** The particular design of the communication subsystem **104** is dependent upon the communication network **200** with which the mobile device **100** is intended to operate. Thus, it should be understood that the design illustrated in FIG. 10 serves only as one example.

Signals received by the antenna **154** through the wireless network **200** are input to the receiver **150,** which may perform such common receiver functions as signal amplification, frequency down conversion, filtering, channel selection, and analog-to-digital (A/D) conversion. A/D conversion of a received signal allows more complex communication functions such as demodulation and decoding to be performed in the DSP **160.** In a similar manner, signals to be transmitted are processed, including modulation and encoding, by the DSP **160.** These DSP-processed signals are input to the transmitter **152** for digital-to-analog (D/A) conversion, frequency up conversion, filtering, amplification and transmission over the wireless network **200** via the antenna **156.** The DSP **160** not only processes communication signals, but also provides for receiver and transmitter control. For example, the gains applied to communication signals in the receiver **150** and the transmitter **152** may be adaptively controlled through automatic gain control algorithms implemented in the DSP **160.**

The wireless link between the mobile device **100** and the wireless network **200** can contain one or more different channels, typically different RF channels, and associated protocols used between the mobile device **100** and the wireless network **200.** An RF channel is a limited resource that must be conserved, typically due to limits in overall bandwidth and limited battery power of the mobile device **100.**

When the mobile device **100** is fully operational, the transmitter **152** is typically keyed or turned on only when it is transmitting to the wireless network **200** and is otherwise turned off to conserve resources. Similarly, the receiver **150** is periodically turned off to conserve power until it is needed to receive signals or information (if at all) during designated time periods.

Referring now to FIG. 11, a block diagram of an example implementation of a node **202** of the wireless network **200** is shown. In practice, the wireless network **200** includes one or more nodes **202.** In conjunction with the connect module **144,** the mobile device **100** can communicate with the node **202** within the wireless network **200.** In the example implementation of FIG. 11, the node **202** is configured in accordance with General Packet Radio Service (GPRS) and Global Systems for Mobile (GSM) technologies. The node **202** includes a base station controller (BSC) **204** with an associated tower station **206,** a Packet Control Unit (PCU) **208** added for GPRS support in GSM, a Mobile Switching Center (MSC) **210,** a Home Location Register (HLR) **212,** a Visitor Location Registry (VLR) **214,** a Serving GPRS Support Node (SGSN) **216,** a Gateway GPRS Support Node (GGSN) **218,** and a Dynamic Host Configuration Protocol (DHCP) **220.** This list of components is not meant to be an exhaustive list of the components of every node **202** within a GSM/GPRS network, but rather a list of components that are commonly used in communications through the network **200.**

In a GSM network, the MSC **210** is coupled to the BSC **204** and to a landline network, such as a Public Switched Telephone Network (PSTN) **222** to satisfy circuit switched requirements. The connection through the PCU **208,** the SGSN **216** and the GGSN **218** to a public or private network (Internet) **224** (also referred to herein generally as a shared network infrastructure) represents the data path for GPRS capable mobile devices. In a GSM network extended with GPRS capabilities, the BSC **204** also contains the Packet Control Unit (PCU) **208** that connects to the SGSN **216** to control segmentation, radio channel allocation and to satisfy packet switched requirements. To track the location of the mobile device **100** and availability for both circuit switched and packet switched management, the HLR **212** is shared between the MSC **210** and the SGSN **216.** Access to the VLR **214** is controlled by the MSC **210.**

The station **206** is a fixed transceiver station and together with the BSC **204** form fixed transceiver equipment. The fixed transceiver equipment provides wireless network coverage for a particular coverage area commonly referred to as a "cell. " The fixed transceiver equipment transmits communication signals to and receives communication signals from mobile devices within its cell via the station **206.** The fixed transceiver equipment normally performs such functions as modulation and possibly encoding and/or encryption of signals to be transmitted to the mobile device **100** in accordance with particular, usually predetermined, communication protocols and parameters, under control of its controller. The fixed transceiver equipment similarly demodulates and possibly decodes and decrypts, if necessary, any communication signals received from the mobile device **100** within its cell. Communication protocols and parameters may vary between different nodes. For example, one node may employ a different modulation scheme and operate at different frequencies than other nodes.

For all mobile devices **100** registered with a specific network, permanent configuration data such as a user profile is stored in the HLR **212.** The HLR **212** also contains location information for each registered mobile device and can be queried to determine the current location of a mobile device. The MSC **210** is responsible for a group of location areas and stores the data of the mobile devices currently in its area of responsibility in the VLR **214.** Further, the VLR **214** also contains information on mobile devices that are visiting other networks. The information in the VLR **214** includes part of the permanent mobile device data transmitted from the HLR **212** to the VLR **214** for faster access. By moving additional information from a remote HLR **212** node to the VLR **214,** the amount of traffic between these nodes can be reduced so that voice and data services can be provided with faster response times and at the same time requiring less use of computing resources.

The SGSN **216** and the GGSN **218** are elements added for GPRS support, namely packet switched data support, within GSM. The SGSN **216** and the MSC **210** have similar responsibilities within the wireless network **200** by keeping track of the location of each mobile device 100. The SGSN **216** also performs security functions and access control for data traffic on the wireless network **200.** The GGSN **218** provides internetworking connections with external packet switched networks and connects to one or more SGSN's **216** via an Internet Protocol (IP) backbone network operated within the network **200.** During normal operations, a given mobile device **100** must perform a "GPRS Attach" to acquire an IP address and to access data services. This requirement is not present in circuit switched voice channels as Integrated Services Digital Network (ISDN) addresses are used for routing incoming and outgoing calls. Currently, all GPRS capable networks use private, dynamically assigned IP addresses, thus requiring the DHCP server **220** connected to the GGSN **218.** There are many mechanisms for dynamic IP assignment, including using a combination of a Remote Authentication Dial-In User Service (RADIUS) server and a DHCP server. Once the GPRS Attach is complete, a logical connection is established from a mobile device **100,** through the PCU **208,** and the SGSN **216** to an Access Point Node (APN) within the GGSN **218.** The APN represents a logical end of an IP tunnel that can either access direct Internet compatible services or private network connections. The APN also represents a security mechanism for the network **200,** insofar as each mobile device **100** must be assigned to one or more APNs and mobile devices **100** cannot exchange data without first performing a GPRS Attach to an APN that it has been authorized to use. The APN may be considered to be similar to an Internet domain name such as "myconnection. wireless.com."

Once the GPRS Attach operation is complete, a tunnel is created and all traffic is exchanged within standard IP packets using any protocol that can be supported in IP packets. This includes tunneling methods such as IP over IP as in the case with some IPSecurity (IPsec) connections used with Virtual Private Networks (VPN). These tunnels are also referred to as Packet Data Protocol (PDP) Contexts and there are a limited number of these available in the network **200.** To maximize use of the PDP Contexts, the network **200** will run an idle timer for each PDP Context to determine if there is a lack of activity. When a mobile device **100** is not using its PDP Context, the PDP Context can be de-allocated and the IP address returned to the IP address pool managed by the DHCP server **220.**

Referring now to FIG. 12, shown therein is a block diagram illustrating components of an example configuration of a host system **250** that the mobile device **100** can communicate with in conjunction with the connect module **144.** The host system **250** will typically be a corporate enterprise or other local area network (LAN), but may also be a home office computer or some other private system, for example, in variant implementations. In this example shown in FIG. 12, the host system **250** is depicted as a LAN of an organization to which a user of the mobile device **100** belongs. Typically, a plurality of mobile devices can communicate wirelessly with the host system **250** through one or more nodes **202** of the wireless network **200.**

The host system **250** includes a number of network components connected to each other by a network **260.** For instance, a user's desktop computer **262a** with an accompanying cradle **264** for the user's mobile device **100** is situated on a LAN connection. The cradle **264** for the mobile device **100** can be coupled to the computer **262a** by a serial or a Universal Serial Bus (USB) connection, for example. Other user computers **262b-262n** are also situated on the network **260,** and each may or may not be equipped with an accompanying cradle **264.** The cradle **264** facilitates the loading of information (e.g., PIM data, private symmetric encryption keys to facilitate secure communications) from the user computer **262a** to the mobile device **100,** and may be particularly useful for bulk information updates often performed in initializing the mobile device **100** for use. The information downloaded to the mobile device **100** may include certificates used in the exchange of messages.

It will be understood by persons skilled in the art that the user computers **262a-262n** will typically also be connected to other peripheral devices, such as printers, etc. which are not explicitly shown in FIG. 12. Furthermore, only a subset of network components of the host system **250** are shown in FIG. 9 for ease of exposition, and it will be understood by persons skilled in the art that the host system **250** will include additional components that are not explicitly shown in FIG. 10 for this example configuration. More generally, the host system **250** may represent a smaller part of a larger network (not shown) of the organization, and may include different components and/or be arranged in different topologies than that shown in the example embodiment of FIG. 12.

To facilitate the operation of the mobile device **100** and the wireless communication of messages and message-related data between the mobile device **100** and components of the host system **250,** a number of wireless communication support components **270** can be provided. In some implementations, the wireless communication support components **270** can include a message management server **272,** a mobile data server **274,** a contact server **276,** and a device manager module **278.** The device manager module 278 includes an IT Policy editor **280** and an IT user property editor **282,** as well as other software components for allowing an IT administrator to configure the mobile devices **100.** In an alternative example embodiment, there may be one editor that provides the functionality of both the IT policy editor **280** and the IT user property editor **282.** The support components **270** also include a data store **284,** and an IT policy server **286.** The IT policy server **286** includes a processor **288,** a network interface **290** and a memory unit **292.** The processor **288** controls the operation of the IT policy server **286** and executes functions related to the standardized IT policy as described below. The network interface **290** allows the IT policy server **286** to communicate with the various components of the host system **250** and the mobile devices **100.** The memory unit **292** can store functions used in implementing the IT policy as well as related data. Those skilled in the art know how to implement these various components. Other components may also be included as is well known to those skilled in the art. Further, in some implementations, the data store **284** can be part of any one of the servers.

In this example embodiment, the mobile device **100** communicates with the host system **250** through node **202** of the wireless network **200** and a shared network infrastructure **224** such as a service provider network or the public Internet. Access to the host system **250** may be provided through one or more routers (not shown), and computing devices of the host system **250** may operate from behind a firewall or proxy server **266.** The proxy server **266** provides a secure node and a wireless internet gateway for the host system **250.** The proxy server **266** intelligently routes data to the correct destination server within the host system **250.**

In some implementations, the host system **250** can include a wireless VPN router (not shown) to facilitate data exchange between the host system **250** and the mobile device **100.** The wireless VPN router allows a VPN connection to be established directly through a specific wireless network to the mobile device 100. The wireless VPN router can be used with the Internet Protocol (IP) Version 6 (IPV6) and IP-based wireless networks. This protocol can provide enough IP addresses so that each mobile device has a dedicated IP address, making it possible to push information to a mobile device at any time. An advantage of using a wireless VPN router is that it can be an off-the-shelf VPN component, and does not require a separate wireless gateway and separate wireless infrastructure. A VPN connection can preferably be a Transmission Control Protocol (TCP)/IP or User Datagram Protocol (UDP)/IP connection for delivering the messages directly to the mobile device **100** in this alternative implementation.

Messages intended for a user of the mobile device **100** are initially received by a message server **268** of the host system **250.** Such messages may originate from any number of sources. For instance, a message may have been sent by a sender from the computer **262b** within the host system **250,** from a different mobile device (not shown) connected to the wireless network **200** or a different wireless network, or from a different computing device, or other device capable of sending messages, via the shared network infrastructure **224,** possibly through an application service provider (ASP) or Internet service provider (ISP), for example.

The message server **268** typically acts as the primary interface for the exchange of messages, particularly email messages, within the organization and over the shared network infrastructure 224. Each user in the organization that has been set up to send and receive messages is typically associated with a user account managed by the message server **268.** Some example implementations of the message server **268** include a Microsoft Exchange^{™} server, a Lotus Domino^{™} server, a Novell Groupwise^{™} server, or another suitable mail server installed in a corporate environment. In some implementations, the host system **250** may include multiple message servers **268.** The message server **268** may also be adapted to provide additional functions beyond message management, including the management of data associated with calendars and task lists, for example.

When messages are received by the message server **268,** they are typically stored in a data store associated with the message server **268.** In at least some example embodiments, the data store may be a separate hardware unit, such as data store **284,** that the message server **268** communicates with. Messages can be subsequently retrieved and delivered to users by accessing the message server **268.** For instance, an email client application operating on a user's computer **262a** may request the email messages associated with that user's account stored on the data store associated with the message server **268.** These messages are then retrieved from the data store and stored locally on the computer **262a.** The data store associated with the message server **268** can store copies of each message that is locally stored on the mobile device **100.** Alternatively, the data store associated with the message server **268** can store all of the messages for the user of the mobile device **100** and only a smaller number of messages can be stored on the mobile device **100** to conserve memory. For instance, the most recent messages (i. e., those received in the past two to three months for example) can be stored on the mobile device **100.**

When operating the mobile device **100,** the user may wish to have email messages retrieved for delivery to the mobile device **100.** The message application **138** operating on the mobile device **100** may also request messages associated with the user's account from the message server **268.** The message application **138** may be configured (either by the user or by an administrator, possibly in accordance with an organization's information technology (IT) policy) to make this request at the direction of the user, at some pre-defined time interval, or upon the occurrence of some pre-defined event. In some implementations, the mobile device **100** is assigned its own email address, and messages addressed specifically to the mobile device **100** are automatically redirected to the mobile device **100** as they are received by the message server **268.**

The message management server **272** can be used to specifically provide support for the management of messages, such as email messages, that are to be handled by mobile devices. Generally, while messages are still stored on the message server **268,** the message management server **272** can be used to control when, if, and how messages are sent to the mobile device **100.** The message management server **272** also facilitates the handling of messages composed on the mobile device **100,** which are sent to the message server **268** for subsequent delivery.

For example, the message management server **272** may monitor the user's "mailbox" (e. g., the message store associated with the user's account on the message server **268)** for new email messages, and apply user-definable filters to new messages to determine if and how the messages are relayed to the user's mobile device **100.** The message management server **272** may also compress and encrypt new messages (e. g., using an encryption technique such as Data Encryption Standard (DES), Triple DES, or Advanced Encryption Standard (AES)) and push them to the mobile device **100** via the shared network infrastructure **224** and the wireless network **200.** The message management server **272** may also receive messages composed on the mobile device **100** (e. g., encrypted using Triple DES), decrypt and decompress the composed messages, re-format the composed messages if desired so that they will appear to have originated from the user's computer **262a,** and re-route the composed messages to the message server **268** for delivery.

Certain properties or restrictions associated with messages that are to be sent from and/or received by the mobile device **100** can be defined (e. g., by an administrator in accordance with IT policy) and enforced by the message management server **272.** These may include whether the mobile device **100** may receive encrypted and/or signed messages, minimum encryption key sizes, whether outgoing messages must be encrypted and/or signed, and whether copies of all secure messages sent from the mobile device **100** are to be sent to a pre-defined copy address, for example.

The message management server **272** may also be adapted to provide other control functions, such as only pushing certain message information or pre-defined portions (e. g., "blocks") of a message stored on the message server **268** to the mobile device **100.** For example, in some cases, when a message is initially retrieved by the mobile device **100** from the message server **268,** the message management server **272** may push only the first part of a message to the mobile device **100,** with the part being of a pre-defined size (e. g., 2 KB). The user can then request that more of the message be delivered in similar-sized blocks by the message management server **272** to the mobile device **100,** possibly up to a maximum predefined message size. Accordingly, the message management server **272** facilitates better control over the type of data and the amount of data that is communicated to the mobile device **100,** and can help to minimize potential waste of bandwidth or other resources.

The mobile data server **274** encompasses any other server that stores information that is relevant to the corporation. The mobile data server **274** may include, but is not limited to, databases, online data document repositories, customer relationship management (CRM) systems, or enterprise resource planning (ERP) applications.

The contact server **276** can provide information for a list of contacts for the user in a similar fashion as the address book on the mobile device **100.** Accordingly, for a given contact, the contact server **276** can include the name, phone number, work address and email address of the contact, among other information. The contact server **276** can also provide a global address list that contains the contact information for all of the contacts associated with the host system **250.**

It will be understood by persons skilled in the art that the message management server **272,** the mobile data server **274,** the contact server **276,** the device manager module **278,** the data store **284** and the IT policy server **286** do not need to be implemented on separate physical servers within the host system **250.** For example, some or all of the functions associated with the message management server **272** may be integrated with the message server **268,** or some other server in the host system **250.** Alternatively, the host system **250** may include multiple message management servers **272,** particularly in variant implementations where a large number of mobile devices need to be supported.

Alternatively, in some example embodiments, the IT policy server **286** can provide the IT policy editor **280,** the IT user property editor **282** and the data store **284.** In some cases, the IT policy server **286** can also provide the device manager module **278.** The processor **288** of the IT policy server **286** can be used to perform the various steps of a method for providing IT policy data that is customizable on a per-user basis. The processor **288** can execute the editors **280** and **282.** In some cases, the functionality of the editors **280** and **282** can be provided by a single editor. In some cases, the memory unit **292** can provide the data store **284.**

The device manager module **278** provides an IT administrator with a graphical user interface with which the IT administrator interacts to configure various settings for the mobile devices **100.** As mentioned, the IT administrator can use IT policy rules to define behaviors of certain applications on the mobile device **100** that are permitted such as phone, web browser or Instant Messenger use. The IT policy rules can also be used to set specific values for configuration settings that an organization requires on the mobile devices **100** such as auto signature text, WLAN/VoIP/VPN configuration, security requirements (e. g., encryption algorithms, password rules, etc.), specifying themes or applications that are allowed to run on the mobile device **100,** and the like.

Many modifications and other embodiments will come to the mind of one skilled in the art having the benefit of the teachings presented in the foregoing descriptions and the associated drawings. Therefore, it is understood that various modifications and embodiments are intended to be included within the scope of the appended claims.

## Claims

1. A mobile wireless communications device (20) comprising:
first and second housings (21, 22);
a hinge (29) pivotally coupling said first and second housings and comprising a hinge body (40) having a passageway therethrough;
a first antenna (24) carried by said first housing;
a second antenna (25) carried by said second housing;
wireless transceiver circuitry (51) carried by said first housing and configured for spatial diversity operation with said first and second antennas; and
a hinge connector (30) carried by said hinge and coupling said second antenna to said wireless transceiver circuitry and comprising a coaxial portion (32) extending into the passageway of said hinge body (40), and a flexible circuit portion (33) being coupled to said coaxial portion (32) and comprising a flexible substrate and a plurality of electrical conductive traces thereon.

2. The mobile wireless communications device (20) according to claim 1 wherein said hinge body (40)has a first end (41) and a medial portion (42) adjacent thereto; and wherein said coaxial portion (32) passes into the first end, and said flexible circuit portion extends from the medial portion.

3. The mobile wireless communications device (20) according to claim 1 further comprising an electrically conductive bias spring (36) providing an electrically conductive path between the first (21) and second housings (22).

4. The mobile wireless communications device (20) according to claim 3 further comprising a circuit board (52) carried by said first housing (21).

5. The mobile wireless communications device according to claim 4 (20) further comprising a capacitor (37) on said circuit board (52) and electrically coupled to said electrically conductive bias spring (36).

6. The mobile wireless communications device (20) according to claim 1 further comprising:
a display carried by said second housing (22); and
a graphic processing unit (GPU) (51) carried by said first housing (21) and configured to be coupled to said display via said hinge connector (30).

7. The mobile wireless communications device (20) according to claim 1 wherein said first antenna (24) is carried by said first housing (21) on an end thereof opposite to said hinge.

8. The mobile wireless communications device (20) according to claim 1 wherein said second antenna (25) is carried by said second housing (22)adjacent said hinge.

9. A method of making a mobile wireless communications device (20) comprising the steps of:
providing first and second housings (21, 22);
pivotally coupling the first and second housings with a hinge (29) comprising a hinge body (40) with a passageway therethrough;
positioning a first antenna (24) to be carried by the first housing;
positioning a second antenna (25) to be carried by the second housing;
positioning wireless transceiver circuitry (51) to be carried by the first housing and for spatial diversity operation with the first and second antennas;
forming the hinge connector (30) to comprise a coaxial portion (32) extending into the passageway of the hinge body (40) and a flexible circuit portion (33) coupled to the coaxial portion and comprising a flexible substrate and a plurality of electrical conductive traces thereon; and
coupling the second antenna to the wireless transceiver circuitry with a hinge connector (30) carried by the hinge (29).

10. The method according to claim 9 wherein the forming of the hinge (29) comprises forming the hinge body (40) to have a first end (41) and a medial portion (42) adjacent thereto; and further comprising positioning the coaxial portion (32) to pass into the first end, and the flexible circuit portion to extend from the medial portion.

11. The method according to claim 9 further comprising electrically coupling the first and second housings (21, 22) with an electrically conductive bias spring (36) providing an electrically conductive path therebetween.

## Patentansprüche

1. Mobile Drahtloskommunikationsvorrichtung (20) mit:
erstem und zweitem Gehäuse (21, 22),
einem Scharnier (29), das das erste und das zweite Gehäuse drehbar koppelt und einen Scharnierhauptteil (40) aufweist, der einen Durchgang dadurch hat,
einer ersten Antenne (24), die von dem ersten Gehäuse getragen wird,
einer zweiten Antenne (25), die von dem zweiten Gehäuse getragen wird,
einem Drahtlossendeempfängerschaltkreis (51), der von dem ersten Gehäuse getragen wird und für einen räumlichen Diversitätsbetrieb mit der ersten und der zweiten Antenne konfiguriert ist, und
einem Scharnierverbindungselement (30), der von dem Scharnier getragen wird und die zweite Antenne an den Drahtlossendeempfängerschaltkreis koppelt und einen Coaxialteil (32), der sich in den Durchgang des Scharnierhauptteils (40) erstreckt, und einen flexiblen Schaltkreisteil (33) aufweist, der an den Coaxialteil (32) gekoppelt ist und ein flexibles Substrat und eine Vielzahl von elektrisch leitenden Bahnen darauf aufweist.

2. Mobile Drahtloskommunikationsvorrichtung (20) nach Anspruch 1, wobei der Scharnierhauptteil (40) ein erstes Ende (41) und einen Mittelteil (42) hat, der daran angrenzt, und wobei der Coaxialteil (32) in das erste Ende übergeht und sich der flexible Schaltkreisteil von dem Mittelteil erstreckt.

3. Mobile Drahtloskommunikationsvorrichtung (20) nach Anspruch 1, ferner mit einer elektrisch leitenden Vorspannungsfeder (36), die einen elektrisch leitenden Pfad zwischen dem ersten (21) und dem zweiten Gehäuse (22) bereitstellt.

4. Mobile Drahtloskommunikationsvorrichtung (20) nach Anspruch 3, ferner mit einer Platine (52), die von dem ersten Gehäuse (21) getragen wird.

5. Mobile Drahtloskommunikationsvorrichtung nach Anspruch 4 (20), ferner mit einem Kondensator (37) auf der Platine (52) und elektrisch an die elektrisch leitende Vorspannungsfeder (36) gekoppelt.

6. Mobile Drahtloskommunikationsvorrichtung (20) nach Anspruch 1, ferner mit:
einer Anzeige, die von dem zweiten Gehäuse (22) getragen wird, und
einer grafikverarbeitenden Einheit (GPU) (51), die von dem ersten Gehäuse (21) getragen wird und dazu konfiguriert ist, über das Scharnierverbindungselement (30) an die Anzeige gekoppelt zu werden.

7. Mobile Drahtloskommunikationsvorrichtung (20) nach Anspruch 1, wobei die erste Antenne (24) von dem ersten Gehäuse an einem Ende davon gegenüber dem Scharnier getragen wird.

8. Mobile Drahtloskommunikationsvorrichtung (20) nach Anspruch 1, wobei die zweite Antenne (25) von dem zweiten Gehäuse (22) an dem Scharnier angrenzend getragen wird.

9. Verfahren zum Herstellen einer mobilen Drahtloskommunikationsvorrichtung (20) mit den folgenden Schritten:
Bereitstellen eines ersten und eines zweiten Gehäuses (21, 22),
drehbares Koppeln des ersten Gehäuses und des zweiten Gehäuses mit einem Scharnier (29), das einen Scharnierhauptteil (40) mit einem Durchgang dadurch aufweist,
Positionieren einer ersten Antenne (24), die von dem ersten Gehäuse getragen werden soll,
Positionieren einer zweiten Antenne (25), die von dem zweiten Gehäuse getragen werden soll,
Positionieren eines Drahtlossendeempfängerschaltkreises (51), der von dem ersten Gehäuse getragen werden soll, für einen räumlichen Diversitätsbetrieb mit der ersten und der zweiten Antenne,
Ausbilden des Scharnierverbindungselements (30), dass er einen Coaxialteil (32), der sich in den Durchgang des Scharnierhauptteils (40) erstreckt, und einen flexiblen Schaltkreisteil (33) aufweist, der an den Coaxialteil gekoppelt ist und ein flexibles Substrat und eine Vielzahl von elektrisch leitenden Bahnen darauf aufweist, und
Koppeln der zweiten Antenne an den Drahtlossendeempfängerschaltkreis mit einem Scharnierverbindungselement (30), das von dem Scharnier (29) getragen wird.

10. Verfahren nach Anspruch 9, wobei das Ausbilden des Scharniers (29) ein Ausbilden des Scharnierhauptteils (40) aufweist, dass er ein erstes Ende (41) und einen Mittelteil (42) hat, der daran angrenzt, und ferner ein Positionieren des Coaxialteils (32), dass er in das erste Ende übergeht, und des flexiblen Schaltkreisteils aufweist, dass er sich von dem Mittelteil erstreckt.

11. Verfahren nach Anspruch 9, ferner mit elektrischem Koppeln des ersten Gehäuses und des zweiten Gehäuses (21, 22) mit einer elektrisch leitenden Vorspannungsfeder (36), die einen elektrisch leitenden Pfad dazwischen bereitstellt.

## Revendications

1. Dispositif mobile de communication sans fil (20) comprenant :
des premier et deuxième boîtiers (21, 22) ;
une charnière (29) couplant en pivotement lesdits premier et deuxième boîtiers et comprenant un corps de charnière (40) ayant un passage à travers celui-ci ;
une première antenne (24) portée par ledit premier boîtier ;
une deuxième antenne (25) portée par ledit deuxième boîtier ;
un ensemble de circuits émetteur-récepteur sans fil (51) porté par ledit premier boîtier et configuré pour une opération de diversité spatiale avec lesdites première et deuxième antennes ; et
un connecteur de charnière (30) porté par ladite charnière et couplant ladite deuxième antenne audit ensemble de circuits émetteur-récepteur sans fil et comprenant une partie coaxiale (32) s'étendant dans le passage dudit corps de charnière (40), et une partie de circuit souple (33) étant couplée à ladite partie coaxiale (32) et comprenant un substrat souple et une pluralité de traces électriquement conductrices sur celui-ci.

2. Dispositif mobile de communication sans fil (20) selon la revendication 1, dans lequel ledit corps de charnière (40) possède une première extrémité (41) et une partie médiane (42) adjacente à celle-ci ; et dans lequel ladite partie coaxiale (32) traverse la première extrémité, et ladite partie de circuit souple s'étend à partir de la partie médiane.

3. Dispositif mobile de communication sans fil (20) selon la revendication 1, comprenant en outre un ressort de sollicitation électriquement conducteur (36) fournissant un chemin électriquement conducteur entre les premier (21) et deuxième (22) boîtiers.

4. Dispositif mobile de communication sans fil (20) selon la revendication 3, comprenant en outre une carte de circuit imprimé (52) portée par ledit premier boîtier (21).

5. Dispositif mobile de communication sans fil (20) selon la revendication 4, comprenant en outre un condensateur (37) sur ladite carte de circuit imprimé (52) et électriquement couplé audit ressort de sollicitation électriquement conducteur (36).

6. Dispositif mobile de communications sans fil (20) selon la revendication 1, comprenant en outre :
un dispositif d'affichage porté par ledit deuxième boîtier (22) ; et
une unité de traitement graphique (GPU) (51) portée par ledit premier boîtier (21) et configurée pour être couplée audit dispositif d'affichage par l'intermédiaire du connecteur de charnière (30).

7. Dispositif mobile de communication sans fil (20) selon la revendication 1, dans lequel la première antenne (24) est portée par ledit premier boîtier (21) sur une extrémité de celui-ci située de manière opposée à ladite charnière.

8. Dispositif mobile de communication sans fil (20) selon la revendication 1, dans lequel la deuxième antenne (25) est portée par ledit deuxième boîtier (22) de manière adjacente à ladite charnière.

9. Procédé de fabrication d'un dispositif mobile de communication sans fil (20), comprenant les étapes qui consistent :
à fournir des premier et deuxième boîtiers (21, 22) ;
à coupler en pivotement les premier et deuxième boîtiers avec une charnière (29) comprenant un corps de charnière (40) avec un passage à travers celui-ci ;
à positionner une première antenne (24) pour être portée par le premier boîtier ;
à positionner une deuxième antenne (25) pour être portée par le deuxième boîtier ;
à positionner un ensemble de circuits émetteur-récepteur sans fil (51) pour être porté par le premier boîtier et pour une opération de diversité spatiale avec les première et deuxième antennes ;
à former le connecteur de charnière (30) de manière à comprendre une partie coaxiale (32) s'étendant dans le passage du corps de charnière (40) et une partie de circuit souple (33) couplée à la partie coaxiale et comprenant un substrat souple et une pluralité de traces électriquement conductrices sur celui-ci ; et
à coupler la deuxième antenne à l'ensemble de circuits émetteur-récepteur sans fil avec un connecteur de charnière (30) porté par la charnière (29).

10. Procédé selon la revendication 9, dans lequel la formation de la charnière (29) comprend le fait de former le corps de charnière (40) de manière à avoir une première extrémité (41) et une partie médiane (42) adjacente à celle-ci ; et comprenant en outre le fait de positionner la partie coaxiale (32) pour traverser la première extrémité, et la partie de circuit souple pour s'étendre à partir de la partie médiane.

11. Procédé selon la revendication 9, comprenant en outre le fait de coupler électriquement les premier et deuxième boîtiers (21, 22) avec un ressort de sollicitation électriquement conducteur (36) fournissant un chemin électriquement conducteur entre ceux-ci.
